(19) Europäisches Patentamt / European Patent Office / Office européen des brevets

(11) **EP 4 207 362 A2**

(12) **EUROPEAN PATENT APPLICATION**

(43) Date of publication:
**05.07.2023 Bulletin 2023/27**

(21) Application number: **22215571.5**

(22) Date of filing: **21.12.2022**

(51) International Patent Classification (IPC):
**H01M 4/134** (2010.01)     **H01M 4/36** (2006.01)
**H01M 4/38** (2006.01)     **H01M 4/02** (2006.01)

(52) Cooperative Patent Classification (CPC):
**H01M 4/134; H01M 4/364; H01M 4/386;**
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021 KR 20210190163**

(71) Applicant: **SK On Co., Ltd.**
**Seoul 03161 (KR)**

(72) Inventors:
• **CHUNG, Ju Ho**
**34124 Daejeon (KR)**
• **JEUN, Jeong Hoon**
**34124 Daejeon (KR)**
• **PARK, Gwi Ok**
**34124 Daejeon (KR)**
• **PARK, Eun Jun**
**34124 Daejeon (KR)**
• **HA, Dong Wook**
**34124 Daejeon (KR)**

(74) Representative: **Stolmár & Partner
Patentanwälte PartG mbB
Blumenstraße 17
80331 München (DE)**

(54) **NEGATIVE ELECTRODE FOR SECONDARY BATTERY AND SECONDARY BATTERY INCLUDING THE SAME**

(57)     Provided is a negative electrode for a secondary battery satisfying the following Relation 1:

[Relation 1]

$$(V_1 - V_2)/V_1 * 100 \geq 45\%$$

wherein $V_1$ is a volume fraction (vol%) of silicon-based active material particles having a gray scale value of 30,000 or more in an XRM measurement on a negative electrode in a fully discharged state after formation, and $V_2$ is a volume fraction (vol%) of silicon-based active material particles having a gray scale value of 30,000 or more in an XRM measurement on a negative electrode in a fully charged state after 500 cycles of charging and discharging.

**EP 4 207 362 A2**

**Description**

**TECHNICAL FIELD**

The present disclosure relates to a negative electrode for a secondary battery and a secondary battery including the same.

**BACKGROUND**

Recently, as an issue of global warming arises, a demand for environmentally friendly technologies is rapidly increasing in response thereto. In particular, as a technical demand for electric vehicles and energy storage systems (ESS) increases, a demand for a lithium secondary battery in the spotlight as an energy storage device is also exploding.
Therefore, studies to improve energy density of the lithium secondary battery are in progress. A conventional commercial lithium secondary battery generally uses a graphite-based active material such as natural graphite and artificial graphite as a negative electrode material, but the energy density of the battery is low due to the low theoretical capacity of graphite (372 mAh/g). Therefore, studies for developing a new negative electrode material for replacing a conventional graphite-based negative electrode material to improve the energy density of a battery are in progress.
As a solution thereto, a silicon-based negative electrode material having a high theoretical capacity (3580 mAh/g) is attracting attention as one solution. However, the silicon-based negative electrode material has a disadvantage of deteriorated battery life characteristics due to a large volume expansion (-400%) in the process of repeated charging and discharging. Accordingly, as a method for solving the large volume expansion issue of the silicon-based negative electrode, a $SiO_x$ negative electrode material having a lower volume expansion rate than Si has been developed, but the initial efficiency (initial coulombic efficiency, ICE) is low due to the formation of an irreversible phase at the beginning of battery operation.

[Related Art Documents]

[Patent Documents]

(Patent Document 1) Korean Patent Laid-Open Publication No. 10-1996-0041439 (December 19, 1996)

**SUMMARY**

An embodiment of the present disclosure is directed to providing a negative electrode for a secondary battery for improving initial efficiency and capacity, and also improving life characteristics by suppressing conversion into an inactive state due to the volume expansion of silicon-based active material particles occurring in the process of repeated charging and discharging.
In one general aspect, a negative electrode for a secondary battery satisfying the following Relation 1 is provided:

$$[Relation\ 1]$$

$$(V_1-V_2)/V_1*100 \geq 45\%$$

wherein $V_1$ is a volume fraction (vol%) of silicon-based active material particles having a gray scale value of 30,000 or more in an XRM measurement on a negative electrode in a fully discharged state after formation, and $V_2$ is a volume fraction (vol%) of silicon-based active material particles having a gray scale value of 30,000 or more in an XRM measurement on a negative electrode in a fully charged state after 500 cycles of charging and discharging.
In addition, in the negative electrode for a secondary battery according to an exemplary embodiment of the present disclosure, the silicon-based active material may include one of Si, $SiO_x$ (0<x≤2), Si-containing alloy, and Si/C composite, or a combination thereof.
In addition, in the negative electrode for a secondary battery according to an exemplary embodiment of the present disclosure, the negative electrode may further include a carbon-based active material.
In addition, in the negative electrode for a secondary battery according to an exemplary embodiment of the present disclosure, the carbon-based active material may include crystalline carbon.
In addition, in the negative electrode for a secondary battery according to an exemplary embodiment of the present disclosure, the negative electrode may include an acryl-based binder.

In addition, in the negative electrode for a secondary battery according to an exemplary embodiment of the present disclosure, the negative electrode may include a carbon nanotube conductive material, and the conductive material may be included at less than 5 wt% with respect to the total weight of the negative electrode active material layer.

In addition, in the negative electrode for a secondary battery according to an exemplary embodiment of the present disclosure, the conductive material may include single walled carbon nanotubes (SWCNT).

In another general aspect, a secondary battery includes the negative electrode described above.

Other features and aspects will be apparent from the following detailed description, the drawings, and the claims.

## BRIEF DESCRIPTION OF THE DRAWINGS

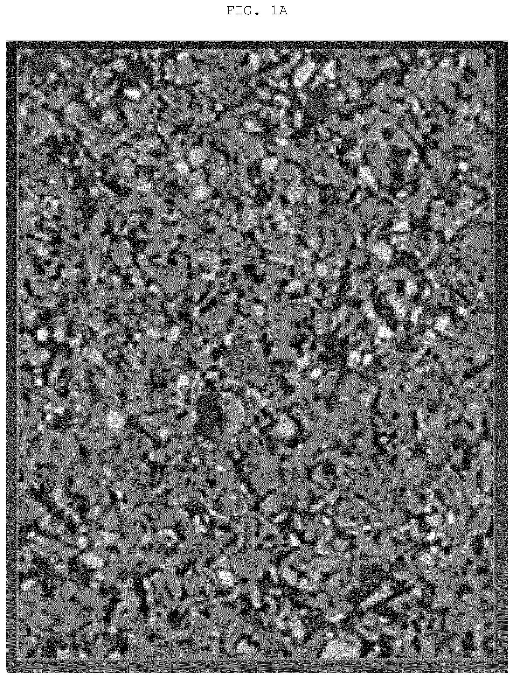

FIG. 1A is a drawing showing the results of X-ray microscopy (XRM) analysis in a fully charged state after 500 cycles of the negative electrode of Example 1.

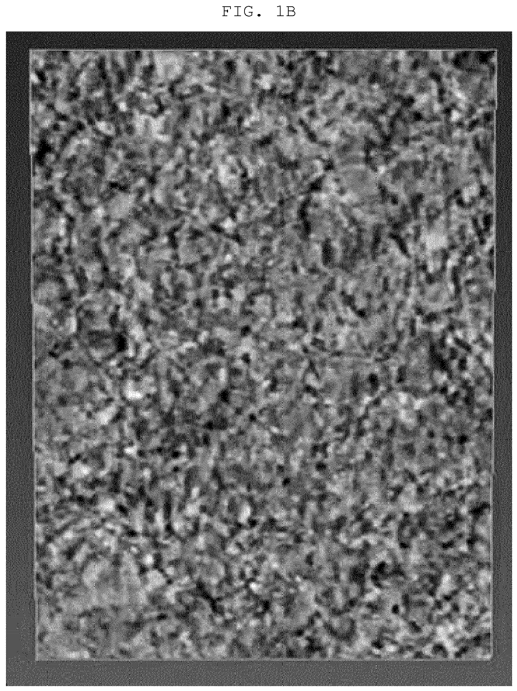

FIG. 1B is a drawing showing the results of X-ray microscopy (XRM) analysis in a fully charged state after 500 cycles of the negative electrode of Example 6.

## DETAILED DESCRIPTION OF EMBODIMENTS

Advantages and features of the present disclosure and methods to achieve them will become apparent from the following exemplary embodiments described in detail with reference to the accompanying drawings. However, the present disclosure is not limited to exemplary embodiments disclosed below, but will be implemented in various forms. The exemplary embodiments of the present disclosure make the present disclosure thorough and are provided so that those skilled in the art can easily understand the scope of the present disclosure. Therefore, the present disclosure will be defined by the scope of the appended claims. Detailed description for carrying out the present disclosure will be provided with reference to the accompanying drawings below. Regardless of the drawings, the same reference number indicates the same constitutional element, and "and/or" includes each of and all combinations of one or more of mentioned items.

Unless otherwise defined herein, all terms used herein (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

In the present specification, it will be understood that when an element such as a layer, film, region, or substrate is referred to as being "on" or "above" another element, it can be "directly on" the other element or intervening elements may also be present.

The present exemplary embodiment provides a negative electrode for a secondary battery satisfying the following Relation 1:

$$[\text{Relation 1}]$$

$$(V_1 - V_2)/V_1 * 100 \geq 45\%$$

wherein $V_1$ is a volume fraction (vol%) of silicon-based active material particles having a gray scale value of 30,000 or more in an XRM measurement on a negative electrode in a fully discharged state after formation, and $V_2$ is a volume fraction (vol%) of silicon-based active material particles having a gray scale value of 30,000 or more in an XRM measurement on a negative electrode in a fully charged state after 500 cycles of charging and discharging.

The volume fraction is calculated based on a total volume of negative electrode active material particles and pores derived by performing X-ray microscopy (XRM) image analysis of a negative electrode. The XRM image analysis is permeation analysis of the negative electrode in a nondestructive manner by a 3D XRM analysis method, and versa 520 XRM equipment from Zeiss was used as the X-ray microscope. The conditions of the XRM image analysis were voxel 350 nm, power 5W (60 kV).

In Relation 1, $V_1$ is derived by an XRM measurement on a negative electrode in a fully discharged state after formation, that is, at SOC 0%, $V_1$ refers to a volume fraction (vol%) of a silicon-based active material in an unreacted state after formation, and the total amount of the silicon-based active material which may participate in a battery reaction after formation may be qualitatively evaluated from $V_1$.

Meanwhile, the formation is a process of forming a solid electrolyte interface (SEI) film on the surface of a negative electrode by initial charging and discharging, and is not particularly limited as long as it is commonly used in the art. After the formation, a negative electrode in a state of SOC 0% may be obtained by a full discharge process. As an example, the discharge process was performed at a discharge rate of 0.33 C under 2.5V cut-off conditions, but is not limited thereto.

In Relation 1, $V_2$ is derived from an XRM measurement on a negative electrode in a state of fully charged state after 500 cycles of charging and discharging, that is, at SOC 100%, $V_2$ refer to a volume fraction (vol%) of a silicon-based active material in an unreacted state where an electrical short circuit occurs, which may not participate in a battery reaction after performing 500 cycles, and the total amount of an inactive silicon-based active material which may not participate in a battery reaction due to the repeated charge and discharge cycles may be qualitatively evaluated from $V_2$. Here, the conditions of charge and discharge in performing the charge and discharge cycles are as follows: Charge may be performed under the conditions of 0.33 C, 4.2 V cut-off and discharge may be performed under the conditions of 0.5 C, 2.5 V cut-off, the conditions of full charge after 500 cycles are not particularly limited, and as a non-limiting example, it may be performed under the conditions of 4.2 V cut-off at a charge rate of 0.33 C.

According to the present disclosure, Relation 1 between $V_1$ and $V_2$ is satisfied, $V_1$ allowing qualitative evaluation of the total amount of the silicon-based active material and $V_2$ allowing qualitative evaluation of the total amount of the inactive silicon-based active material which may not participate in a battery reaction due to the repeated charge and discharge cycles, thereby increasing the ratio of the silicon-based active material which may maintain an active state even during repeated charge and discharge cycles.

Specifically, $(V_1-V_2)$ allows qualitative evaluation of the total amount of the silicon-based active material in an active state which may participate in a battery reaction even during repeated charge and discharge cycles. According to the present disclosure, Relation 1 which refers to a ratio of the total amount $(V_1-V_2)$ of the silicon-based active material in an active state to the total amount $(V_1)$ of the silicon-based active material is satisfied, thereby increasing a ratio of the silicon-based active material which may maintain an active state even during repeated charge and discharge cycles. Therefore, the life characteristics of the battery may be significantly improved.

Here, the active state may refer to a state in which an electrochemical reaction may occur continuously in a state in which an electrical network is maintained well, without occurrence of an electrical short circuit between the silicon-based active material particles by the volume expansion of the silicon-based active material particles during a process of repeated charging and discharging.

In terms of further improving the battery life characteristics, the value of $(V_1-V_2)/V_1*100$ of Relation 1 may be 500 or more, 55% or more, or 60% or more.

The silicon-based active material may include one of Si, $SiO_x$ ($0<x\leq2$), Si-containing alloy, and Si/C composite, or a combination thereof.

The Si-containing alloy is not particularly limited, but for example, may be expressed as a Si-Q alloy. Q is an element selected from the group consisting of alkali metals, alkaline earth metals, group 13 elements, group 14 element other than Si, group 15 elements, group 16 elements, transition metals, rare earth element, and combinations thereof. The element Q may be, for example, selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

The negative electrode according to an exemplary embodiment of the present disclosure includes a current collector and a negative electrode active material layer including a negative electrode active material and a binder, disposed on the current collector.

The negative electrode active material may further include a carbon-based active material. Specifically, any carbon-based active material may be used as long as it may reversibly intercalate/deintercalate a lithium ion. As a specific example, one or a mixture thereof of crystalline carbon and amorphous carbon may be included. As a non-limiting example, the amorphous carbon may be one of soft carbon (low temperature baked carbon), hard carbon, coke, mesocarbon microbeads (MCMB) baked at 1500°C or lower, and mesophase pitch-based carbon fiber (MPCF) or a combination thereof. As a non-limiting example, the crystalline carbon may be one of graphite such as natural graphite, artificial graphite, and expanded graphite, carbon black, graphene, fullerene soot, carbon nanotubes, carbon nanowire, carbon fiber, and porous carbon (micro/meso/macro porous carbon) or a combination thereof. The carbon-based active material may be used in a spherical, plate-like, fibrous, tube-like, or powder form.

The negative electrode according to an exemplary embodiment of the present disclosure may be used by mixing the silicon-based active material and the carbon-based active material at a weight ratio of 1 to 100:99 to 0. Accordingly, high capacity properties may be implemented, and the excessive volume expansion of the silicon-based active material which occurs during repeated charging and discharging may be buffered. More specifically, they may be mixed at a weight ratio of 5 to 100:95 to 0, 1 to 50:99 to 50, 5 to 50:95 to 50, 1 to 30:99 to 70, 5 to 30:95 to 70, 1 to 20:99 to 80, or 5 to 20:95 to 80.

Though the binder is not particularly limited, preferably, an acryl-based binder may be included. The acryl-based binder may include, for example, one or more selected from the group consisting of polyacrylic acid (PAA), polyacrylamide, and poly(vinylalcohol-co-acrylic acid). Accordingly, it may perform roles of formation of a paste of an active material in the negative electrode, mutual adhesion of active materials, adhesion to a current collector, and the like, and an electrical contact between the active materials may be maintained well even when the volume change of the silicon-based active material in the negative electrode occurs, due to its excellent adhesive strength.

In terms of efficiently expressing the effect described above, the content of the acryl-based binder may be, for example, 0.1 to 30 wt% or 1 to 10 wt% with respect to the total weight of the negative active material layer.

The conductive material may include, for example, multi-walled carbon nanotubes (MWCNT) or single-walled carbon nanotubes (SWCNT). Since the multi-walled carbon nanotubes (MWCNT) are formed of 10 or more walls and have a large diameter and many surface defects, they have a lower electrical conductivity than single-walled carbon nanotubes formed of an average of 1 to 3 walls, and thus, should be applied at a higher content than the single-walled carbon nanotubes. Here, the content of the conductive material may be 10 wt% or less, 5 wt% or less, or 0.5 to 1 wt% with respect to the total weight of the negative electrode active material. Since the single-walled carbon nanotubes have a high electrical conductivity, conductivity between the silicon-based active material particles in the negative electrode may be stably maintained even in the case of lowering the content to a tenth of a usual conductive material content. Specifically, when the single-walled carbon nanotube conductive material is included, an electrical network between the negative electrode active material particles may be maintained even with the volume expansion of the silicon-based active material particles due to the process of repeated charging and discharging, thereby improving life characteristics. Here, the content of the conductive material may be 5 wt% or less, 1 wt% or less, or 0.05 to 0.5 wt% with respect to the total weight of the negative electrode active material layer.

The negative electrode according to the present exemplary embodiment may be produced by applying a negative electrode slurry including the negative electrode active material described above, a binder, a conductive material, and a solvent on a current collector and then drying.

More specifically, the negative electrode slurry may be prepared preferably by dispersing the conductive material in the binder solution first, and then adding the negative electrode active material described above and mixing. Accordingly, the phase stability of the finally prepared negative electrode slurry may be secured and the conductive material may be uniformly dispersed in the negative electrode slurry, thereby efficiently expressing the effect of the conductive material described above.

Meanwhile, the binder solution refers to a mixture in which undissolved binders are present in the form of particles in the solvent, and a thickener and the like may be further mixed, if necessary. Here, the solid content in the binder solution except the solvent may be 0.5 to 50 wt% or 10 to 40 wt%.

The solvent may be at least one selected from the group consisting of water, pure water, deionized water, distilled water, ethanol, isopropanol, methanol, acetone, n-propanol, and t-butanol, but is not limited thereto.

The thickener may be a mixture of one or more of cellulose-based compounds, specifically, carboxymethyl cellulose, hydroxypropylmethyl cellulose, methyl cellulose, alkali metal salts thereof, or the like. The alkali metal may be Na, K, or Li.

The current collector may be selected from the group consisting of a copper foil, a nickel foil, a stainless steel foil, a titanium foil, a nickel foam, a copper foam, a polymer substrate coated with a conductive metal, and a combination thereof, but is not limited thereto.

The application may be performed by any application method which is known to be used for applying a liquid phase to form a film. For example, spray coating, dip coating, spin coating, gravure coating, slot die coating, doctor blade coating, roll coating, inkjet printing, flexography printing, screen printing, electrostatic hydrodynamic printing, micro contact printing, imprinting, reverse offset printing, bar-coating, gravure offset printing, and the like may be used, but the present disclosure is not limited thereto.

The drying may be performed at a temperature of 80 to 130°C, preferably 100 to 130°C for 10 to 50 minutes, preferably 15 to 30 minutes.

Then, the dried electrode may be rolled to have an appropriate density, thereby producing a negative electrode in which a negative electrode active material layer is formed on a current collector.

The present exemplary embodiment also provides a secondary battery including the negative electrode. The secondary battery may include a negative electrode; a positive electrode; a separator interposed between the negative electrode and the positive electrode; and an electrolyte solution.

The negative electrode is as described above.

The positive electrode may include a current collector, and a positive electrode active material layer formed by applying a positive electrode slurry including a positive electrode active material on the current collector.

The current collector may be the negative electrode current collector described above, and any known material in the art may be used, but the present disclosure is not limited thereto.

The positive electrode active material layer includes a positive electrode active material, and optionally, may further include a binder and a conductive material. The positive electrode active material may be any positive electrode active material known in the art, and for example, it is preferred to use a composite oxide of lithium with a metal selected from cobalt, manganese, nickel, and a combination thereof, but the present disclosure is not limited thereto.

Any binder may be used without particular limitation as long as it is commonly used in the art. For example, it may include organic binders such as polyvinylidene fluoride-hexafluoropropylene copolymer (PVDF-co-HFP), polyvinylidene fluoride (polyvinylidene fluoride, PVDF), polyacrylonitrile, and polymethylmethacrylate, or water-based binders such as styrene-butadiene rubber (SBR), and may be used with a thickener such as carboxymethyl cellulose (CMC).

The conductive material is used for imparting conductivity to an electrode, and any conductive material may be used as long as it is an electroconductive material which does not cause a chemical change in the battery to be configured. An example of the conductive material includes a carbon-based material such as natural graphite, artificial graphite, carbon black, acetylene black, ketjen black, and carbon fiber; a metal-based material such as metal powder or metal fiber of copper, nickel, aluminum, silver, and the like; a conductive polymer such as a polyphenylene derivative; or a mixture thereof.

The separator is not particularly limited as long as it is a separator known in the art. For example, the separator may be selected from glass fiber, polyester, polyethylene, polypropylene, polytetrafluoroethylene, or a combination thereof, may be in the form of nonwoven or woven fabric, and may be used optionally in the form of a single layer or multilayer structure.

The electrolyte solution includes a non-aqueous organic solvent and an electrolytic salt. The non-aqueous organic solvent may be ethylene carbonate (EC), propylene carbonate (PC), dimethyl carbonate (DMC), diethyl carbonate (DEC), ethylmethyl carbonate (EMC), 1,2-dimethoxyethene (DME), $\gamma$-butyrolactone (BL), tetrahydrofuran (THF), 1,3-dioxolane (DOL), diethylether (DEE), methyl formate (MF), methyl propionate (MP), sulfolane (S), dimethyl sulfoxide (DMSO), acetonitrile (AN), or a mixture thereof, but is not limited thereto. The electrolytic salt is a material which is dissolved in the non-aqueous organic solvent and serves as a source of electrolytic metal ions in the battery to allow basic operation of the secondary battery and is a material which promotes migration of electrolytic metal ions between a positive electrode and a negative electrode. As a non-limiting example, when the electrolytic metal is lithium, the electrolytic salt may be $LiPF_6$, $LiBF_4$, LiTFSI, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, $LiN(C_xF_{2x+1}SO_2)(C_yF_{2y+1}SO_2)$ (wherein x and y are a natural number), LiCl, LiI, or a mixture thereof, but the present disclosure is not limited thereto. In addition, as the electrolytic salt, a known material may be used at a concentration for purpose, and if necessary, a known solvent or an additive may be further included for improving charge/discharge properties, flame retardance, and the like.

Hereinafter, the present disclosure will be described in detail by the examples, but the examples are for describing the present disclosure in more detail, and the scope of the present disclosure is not limited to the following examples.

**Examples**

(Example 1)

Step 1: (Preparation of negative electrode slurry)

83 wt% of artificial graphite, 13 wt% of $SiO_x$, 3 wt% of an acryl-based binder (polyacrylic acid, PAA), and 1 wt% of MWCNT (C-nano) were mixed simultaneously to prepare a negative electrode slurry having a solid content of 43 wt%.

Step 2: Production of negative electrode

The negative electrode slurry prepared in step 1 was applied on a copper current collector (copper foil having a thickness of 8 um) using a slot die coater. Subsequently, it was dried in a drying furnace which was heated with hot air at 120°C for 30 minutes to complete a negative electrode active material layer. At this time, the thickness of the negative electrode active material layer was 50 $\mu$m.

Step 3: Production of positive electrode:

Li $[Ni_{0.88}Co_{0.1}Mn_{0.02}]O_2$ as a positive electrode active material, carbon black as a conductive material, and polyvinylidene fluoride (PVdF) as a binder were mixed at a weight ratio of 96.5:2:1.5 to prepare a positive electrode slurry. The positive electrode slurry was evenly applied on an aluminum foil having a thickness of 12 um and was dried under vacuum to produce a positive electrode for a secondary battery.

Step 4: Production of secondary battery:

The positive electrode and the negative electrode were laminated by notching at predetermined sizes, respectively, a separator (polyethylene, thickness of 13 μm) was interposed between the positive electrode and the negative electrode to form an electrode cell, and then tap parts of the positive electrode and the negative electrode were welded, respectively. An assembly of welded positive electrode/separator/negative electrode was placed in a pouch, and three sides except an electrolyte solution injection side were sealed. At this time, a portion with the electrode tab was included in a sealing part.

The electrolyte solution was injected through the sides other than the sealing part, the remaining side was sealed, and impregnation was performed for 12 hours or more.

As the electrolyte solution, 1 M $LiPF_6$ was dissolved in a mixed solvent of EC/EMC/DEC (25/45/30, volume ratio), and then 1 wt% of vinylene carbonate (VC) and 3 wt% of fluoroethylene carbonate (FEC) were added thereto to obtain an electrolyte solution.

(Example 2)

A negative electrode, a positive electrode, and a secondary battery were produced in the same manner as in Example 1, except that 83.4 wt% of artificial graphite, 13 wt% of $SiO_x$, 2 wt% of a SBR binder, 1.5 wt% of a CMC thickener, and 0.1 wt% of SWCNT (OCSiAl) were mixed simultaneously to prepare a negative electrode slurry, which was used to produce a negative electrode.

(Example 3)

A negative electrode, a positive electrode, and a secondary battery were produced in the same manner as in Example 1, except that 83.9 wt% of artificial graphite, 13 wt% of $SiO_x$, 3 wt% of an acryl-based binder (polyacrylic acid, PAA), and 0.1 wt% of SWCNT (OCSiAl) were mixed simultaneously to prepare a negative electrode slurry, which was used to produce a negative electrode.

(Comparative Example 1)

A negative electrode, a positive electrode, and a secondary battery were produced in the same manner as in Example 1, except that a negative electrode slurry to which 2 wt% of a SBR binder and 1 wt% of a CMC thickener were added instead of 3 wt% of the acryl-based binder (polyacrylic acid, PAA) was used to produce a negative electrode.

[Evaluation Example 1] Evaluation of life characteristics depending on the kinds of binder and conductive material

The secondary batteries produced in Examples 1 to 3 and Comparative Example 1 were charged to 4.2 V at 0.25 C and discharged to 2.5 V at 0.25 C, were subjected to a formation process under the conditions of charging to 3.5 V at 0.25 C, and were fully discharged under the conditions of 0.33 C, 2.5 V cut-off, and XRM analysis was performed for the negative electrode in a fully discharged state after the formation (State 1) and the volume fraction ($V_1$, vol%) of the silicon-based active material particles having a gray scale value of 30,000 or more was derived. The results are shown in the following Table 1.

Thereafter, 500 cycles of charging and discharging were performed under the charging conditions of 0.33 C, 4.2 V cut-off and the discharging conditions of 0.5 C, 2.5 V cut-off to measure a capacity retention rate (%), and a full charge was performed under the conditions of 0.33 C, 4.2 V cut-off. After the 500 cycles of charging and discharging, XRM analysis was performed on a negative electrode in a fully charged state after 500 cycles (State 2), and the volume fraction ($V_2$, vol%) of the silicon-based active material particles having a gray scale value of 30,000 or more was derived. The results are shown in the following Table 1.

The $V_1$ and $V_2$ volume fractions were calculated using the gray scale value of an X-ray microscopic (XRM) image, and the X-ray microscope was Versa 520 XRM equipment from Zeiss. XRM analysis conditions were as follows:

-   Voxel: 350 nm
-   Power: 60 kV, 5 W

[Table 1]

| | Binder | Conductive material | Volume fraction (vol%) | | $(V_1-V_2)$ /$V_1$*100 (%) | Capacity retention rate (%) |
|---|---|---|---|---|---|---|
| | | | State 1 | State 2 | | |
| | | | V1 | V2 | | |
| Example 1 | PAA | MWCNT | 9.9 | 5.2 | 47 | 80 |
| Example 2 | CMC/SBR | SWCNT | 9.8 | 4.6 | 53 | 83 |
| Example 3 | PAA | SWCNT | 9.9 | 3.5 | 65 | 87 |
| Comparative Example 1 | CMC/SBR | MWCNT | 9.9 | 5.5 | 44 | 75 |

In Table 1, State 1 refers to a negative electrode in a fully discharged state after formation (SOC 0%), and State 2 refers to a negative electrode in a fully charged state after 500 cycles of charging and discharging (SOC 100%).

It was confirmed from the results of Table 1 that Examples 1 to 3 which had (($V_1-V_2$)/$V_1$*100) of 45% or more and satisfied Relation 1 had a capacity retention rate of 80% or more and had better life characteristics than Comparative Example 1. It was found from the results that since the negative electrode satisfying Relation 1 had a high ratio of the silicon-based active material which may maintain an active state even during repeated charge and discharge cycles, battery life characteristics were excellent.

Meanwhile, it was confirmed that Examples 2 and 3 using a SWCNT conductive material showed a higher value of (($V_1-V_2$)/$V_1$*100) and had a better capacity retention rate than Example 1 using a MWCNT conductive material. Since in SWCNT, CNT is formed of 1 to 3 walls and has a very small diameter and a very high electrical conductivity, an electrical contact between the $SiO_x$ particles was maintained well even when the volume of $SiO_x$ particles was expanded in the process of 500 cycles, and thus, it was advantageous for securing excellent life characteristics as compared with MWCNT. However, since MWCNT is formed of 10 or more walls and has a large diameter and many surface defects, the effects described above were not able to be implemented even when the content was increased by 10 times as compared with SWCNT, and thus, the life characteristics were inferior.

In addition, in Example 3 using an acryl-based binder, it was confirmed that better life characteristics than those of Example 2 using a SBR/CMC binder were shown. The results are considered as being due to the fact that the acryl-based binder had stronger adhesive strength than the SBR/CMC binder when the volume $SiO_x$ particles was changed in the process of repeated charging and discharging, thereby maintaining the electrical contact between particles more stably.

[Evaluation Example 2] Evaluation of life characteristics depending on production method of negative electrode slurry

(Example 4)

A negative electrode, a positive electrode, and a secondary battery were produced in the same manner as in Example 1, except that MWCNT (C-nano) was dispersed in an acryl-based binder (polyacrylic acid, PAA) solution first, 83 wt% of artificial graphite and 13 wt% of $SiO_x$ were added thereto to prepare a negative electrode slurry. At this time, the content of the MWCNT conductive material in the negative electrode slurry prepared above was 1 wt%, and the content of the acryl-based binder (polyacrylic acid, PAA) was 3 wt%.

(Example 5)

A negative electrode, a positive electrode, and a secondary battery were produced in the same manner as in Example 1, except that 0.1 wt% of SWCNT (OCSiAl) was dispersed in a SBR/CMC binder solution first, and 83.4 wt% of artificial graphite and 13 wt% of $SiO_x$ were added thereto to prepare a negative electrode slurry. At this time, the content of the SWCNT conductive material in the negative electrode slurry prepared above was 0.1 wt%, and the content of the SBR/CMC binder was 3.5 wt%.

(Example 6)

A negative electrode, a positive electrode, and a secondary battery were produced in the same manner as in Example 1, except that SWCNT (OCSiAl) was dispersed in an acryl-based binder (polyacrylic acid, PAA) solution first, 83.9 wt% of artificial graphite and 13 wt% of $SiO_x$ were added thereto to produce a negative electrode slurry. At this time, the content of the SWCNT conductive material in the negative electrode slurry prepared above was 0.1 wt%, and the content of the acryl-based binder (polyacrylic acid, PAA) was 3 wt%.

(Example 7)

A negative electrode, a positive electrode, and a secondary battery were produced in the same manner as in Example 1, except that MWCNT (C-nano) was dispersed in a SBR/CMC binder solution first, and 82.5 wt% of artificial graphite and 13 wt% of $SiO_x$ were added thereto to prepare a negative electrode slurry. At this time, the content of the MWCNT conductive material in the negative electrode slurry prepared above was 1 wt%, and the content of the SBR/CMC binder was 3.5 wt%.

A formation and charge/discharge experiment was performed on the secondary batteries produced in Examples 4 to 7 in the same manner as in Evaluation Example 1, XRM analysis was performed on the negative electrode in a fully discharged state after formation (State 1) and in a fully charged state after 500 cycles of charging and discharging (State 2), the volume fraction (vol%) of silicon-based active material particles having a gray scale value of 30,000 or more was derived, the capacity retention rate was measured, and the results are shown in the following Table 2. At this time, the methods of measuring the volume fraction and the capacity retention rate are as described in Evaluation 1.

Meanwhile, the results of XRM analysis for the negative electrode in a fully charged state after 500 cycles (State 2) of Example 6 are shown in FIGS 1A and 1B.

[Table 2]

| | Mixing method | Binder | Conductive material | Volume fraction (vol%) | | $(V_1-V_2)/V_1 \times 100$ (%) | Capacity retention rate (%) |
|---|---|---|---|---|---|---|---|
| | | | | State 1 V1 | State 2 V2 | | |
| Example 1 | Simultaneous addition | PAA | MWCNT | 9.9 | 5.2 | 47 | 80 |
| Example 2 | | CMC/SBR | SWCNT | 9.8 | 4.6 | 53 | 83 |
| Example 3 | | PAA | SWCNT | 9.9 | 3.5 | 65 | 87 |
| Example 4 | Sequential addition | PAA | MWCNT | 9.8 | 5 | 49 | 80 |
| Example 5 | | CMC/SBR | SWCNT | 9.9 | 4.1 | 59 | 85 |
| Example 6 | | PAA | SWCNT | 9.9 | 2.7 | 73 | 89 |
| Example 7 | | CMC/SBR | MWCNT | 9.9 | 5.3 | 46 | 78 |

As seen in Table 2, in Examples 1 to 3 to which a negative electrode slurry prepared by adding the negative electrode active material, the binder, and the conductive material simultaneously was applied, it was confirmed that a lower value of $((V_2-V_2)/V_1 \times 100)$ and a lower capacity retention rate were shown as compared with Examples 4 to 6 to which the negative electrode slurry having the same composition. In Examples 4 to 6, it is considered that since the active material was added in a state of uniformly dispersing the conductive material by mixing the binder and the conductive material first, the conductive material was uniformly dispersed to stably secure excellent conductivity, and thus, excellent performance was shown as compared with Examples 1 to 3.

Meanwhile, in Examples 4 to 6, it is confirmed that the trend of change in $((V_1-V_2)/V_1 \times 100)$ and the capacity retention rate depending on the kinds of binder and conductive material was the same as that in Evaluation Example 1. In Example 6 using a SWCNT conductive material and the acryl-based binder, it is considered that though the volume of the silicon particles was expanded by charging and discharging for a long time, an electrical contact between the active material particles was maintained stably well, and thus, the volume fraction change was the highest, and thus, the life characteristics were the best.

In Example 7, it is considered that though the input method of dispersing the conductive material first was applied, an electrical contact between active material particles was not maintained well in the volume expansion of the silicon particles due to charging and discharging for a long time, and thus, relatively low volume fraction change and life characteristics were shown.

Meanwhile, referring to FIGS. 1A and 1B, it is confirmed that the volume expansion rate of $SiO_x$ particles in a fully charged state after 500 cycles of the negative electrode of Example 6 was significantly decreased as compared with Example 1.

The negative electrode for a secondary battery according to the present disclosure may improve initial efficiency and capacity.

In addition, the negative electrode for a secondary battery according to the present disclosure is controlled to satisfy the following Relation 1, thereby effectively suppressing an electrical short circuit which occurs between the silicon-based active material particles due to the volume expansion of the silicon-based active material particles occurring in the process of repeated charging and discharging, so that a ratio of the silicon-based active material which may maintain an active state even during repeated charge and discharge cycles may be increased. Thus, the stability and the life characteristics of a secondary battery may be improved.

[Relation 1]

$$(V_1-V_2)/V_1*100 \geq 45\%$$

wherein $V_1$ is a volume fraction (vol%) of silicon-based active material particles having a gray scale value of 30,000 or more in an XRM measurement on a negative electrode in a fully discharged state after formation, and $V_2$ is a volume fraction (vol%) of silicon-based active material particles having a gray scale value of 30,000 or more in an XRM measurement on a negative electrode in a fully charged state after 500 cycles of charging and discharging.

Although the exemplary embodiments of the present disclosure have been described above, the present disclosure is not limited to the exemplary embodiments but may be made in various forms different from each other, and those skilled in the art will understand that the present disclosure may be implemented in other specific forms without departing from the essential feature of the present disclosure. Therefore, it should be understood that the exemplary embodiments described above are not restrictive, but illustrative in all aspects.

**Claims**

1. A negative electrode for a secondary battery satisfying the following Relation 1:

[Relation 1]

$$(V_1-V_2)/V_1*100 \geq 45\%$$

wherein $V_1$ is a volume fraction (vol%) of silicon-based active material particles having a gray scale value of 30,000 or more in an XRM measurement on a negative electrode in a fully discharged state after formation, and $V_2$ is a volume fraction (vol%) of silicon-based active material particles having a gray scale value of 30,000 or more in an XRM measurement on a negative electrode in a fully charged state after 500 cycles of charging and discharging.

2. The negative electrode for a secondary battery of claim 1, wherein the silicon-based active material includes one of Si, $SiO_x$ ($0<x\leq2$), a Si-containing alloy, and a Si/C composite, or a combination thereof.

3. The negative electrode for a secondary battery of claim 1, wherein the negative electrode further includes a carbon-based active material.

4. The negative electrode for a secondary battery of claim 3, wherein the carbon-based active material includes crystalline carbon.

5. The negative electrode for a secondary battery of claim 1, wherein the negative electrode includes an acryl-based binder.

6. The negative electrode for a secondary battery of claim 1, wherein the negative electrode includes a carbon nanotube conductive material, and the conductive material is included at less than 5 wt% with respect to a total weight of a negative electrode active material layer.

7. The negative electrode for a secondary battery of claim 6, wherein the conductive material includes single-walled carbon nanotubes (SWCNT).

8. A secondary battery comprising the negative electrode of any one of claims 1 to 7.

FIG. 1A

FIG. 1B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1019960041439